# EUROPEAN PATENT APPLICATION

(11) **EP 3 301 765 A1**
(43) Date of publication of application: **04.04.2018**
(21) Application number: 16191768.7
(22) Date of filing: 30.09.2016
(51) Int. Cl.: H01R 13/66, H04B 3/54, H04B 1/3888

(54) **UNIT FOR PROVIDING A WIRELESS NETWORK**

(71) Applicant: Triax A/S, 8783 Hornsyld (DK)
(72) Inventor: FRIIS, Michael S., 8700 Horsens (DK)
(74) Representative: Inspicos P/S

(57) **Abstract**

The present invention relates to a simple and robust signal outlet for providing a wireless network, the signal outlet comprising an input/output terminal adapted to receive an input signal comprising first signal being superimposed into a second signal, a wireless communication unit adapted to provide a local wireless network in a vicinity of the signal outlet, and a power supply unit being adapted to generate power from an input signal being provided on the input/output terminal. The signal outlet may be implemented as a wall mountable signal outlet having standard dimensions. The present invention also relates to an intelligent signal outlet.

## Description

### FIELD OF THE INVENTION

The present invention relates to a unit, such as a wall mountable signal outlet, for providing a local wireless network. Moreover, the present invention relates to an intelligent unit, such as a wall mountable signal outlet, that isolates re-transmission of streamed data signals, such as streamed AV signal, at the signal outlet side from a source from which the streamed data signals originate.

### BACKGROUND OF THE INVENTION

It is a well-known phenomenon within for example the hotel business that the overall speed of wireless networks comprising a large number of access points may be significantly reduced when a large number of users start to stream data, such as AV data, via the wireless network.

The reduced overall speed of the network is typically considered to be a bandwidth issue. However, what apparently seems to be a bandwidth issue is however more related to a re-transmission issue.

Thus, there seems to be a need for reducing the level of re-transmission through the entire network, i.e. to use a non-TCP connection. A reduction of the re-transmission level may be accomplished if streamed data signals may be buffered at or near the access points so that re-transmission will only occur locally.

One approach to prevent re-transmission at the wireless network side is to use a non-TCP connection. Re-transmissions may be further reduced using adaptive streaming as this takes into account the available connection speed.

It may be seen as an object of embodiments of the present invention to provide a wall mountable signal outlet having an integrated wireless communication unit and a power supply unit for powering at least the wireless communication unit.

It may be seen as a further object of embodiments of the present invention to provide a signal unit, such as an intelligent wall mountable signal outlet, that facilitates local re-transmission of streamed signals.

### DESCRIPTION OF THE INVENTION

The above-mentioned objects are complied with by providing, in a first aspect a signal outlet for providing a wireless network, the signal outlet comprising
a) an input/output terminal adapted to receive an input signal comprising first signal being superimposed into a second signal,
b) a wireless communication unit adapted to provide a local wireless network in a vicinity of the signal outlet, and
c) a power supply unit adapted to generate power from an input signal being provided on the input/output terminal.

The signal outlet according to the present invention may be a wall mountable outlet suitable for being mounted in a standard wall socket. As addressed above the signal outlet may comprise an input/output terminal for either receiving or transmitting signal from/to a cable installation in a building.

The term input signal is to be understood broadly in that it may cover various types of signals/inputs, including data signals, AV signals, audio signals, power input signals etc.

The first signal may comprise one or more data signals being provided as baseband signals, or baseband signals modulated onto a radio frequency signal.

The signal outlet of the present invention is adapted transmit the information in said one or more data signal via the local wireless network. The second signal may be a completely different signal, including power input signals, phone signals, TV signals etc.

The wireless communication requires electrical power. It is advantageous of the signal outlet of the present invention that the power supply unit is capable of generating power from an input signal being provided on the input/output terminal. Preferably, the power supply unit generates the required amount of power from the second signal.

In order to generate power from the second signal he power supply unit may comprise at least one power converter, such as an AC/DC and/or a DC/DC converter. Preferably, the power supply unit provides power to at least some of the elements of the signal outlet, including the wireless communication unit. This is highly advantageous in that a separate power supply may then be completely avoided.

The wireless communication unit may in principle be adapted to operate in accordance with any wireless standard, including LiFi, WIFI, Bluetooth or a similar standard.

Signal outlet may further comprise one or more baseband receive/transmit units. Preferably, each of the baseband receive/transmit units is adapted to be operated in accordance with the G.hn specification. By operated is meant that each of the baseband receive/transmit units is adapted to encrypt/decrypt the first signal in accordance with the G.hn specification.

The signal outlet of the present may further comprise a switching unit. The switching unit may comprise an internet group management protocol (IGMP). The signal outlet of the present invention may further comprise a buffer unit adapted to buffer streamed data signals, such as streamed AV signals. The signal outlet may further comprising a streaming unit being operatively connected between the switching unit and the buffer unit, said streaming unit being adapted to obtain and provide streamed data signals, such as streamed AV signals, to the buffer unit. The streaming unit may comprise a SAT>IP client, an AV decoder/transcoder etc.

The signal outlet of the invention may further comprise a server unit being operatively connected between the buffer unit and the switching unit, said server unit being adapted to re-transmit buffered data signals, such as buffered AV signals. The server unit may comprise a SAT>IP server, a HTTP server etc. In case of an HTTP server this server may be intended for delivery of requested AV streams and acquisition information such as required by adaptive streaming clients, such as DASH, HLS, MSS or a similar mechanism.

A feedback arrangement from the wireless communication unit, the buffer unit and the streaming unit to the server unit may be provided. The feedback arrangement may be adapted to re-transmit buffered data signals from the buffer unit in order to obtain AV streams with properties best suited for wireless delivery according to the current connection quality, i.e. Quality of Service (QoS).

In a second aspect, the present invention relates to a signal unit for providing a wireless network, the signal unit comprising
a) an input/output terminal,
b) a wireless communication unit adapted to provide a local wireless network in a vicinity of the signal outlet,
c) a buffer unit adapted to buffer streamed data signals received via the input/output terminal,
d) a switching unit,
e) a streaming unit being operatively connected between the switching unit and the buffer unit, said streaming unit being adapted to provide streamed data signals to the buffer unit, and
f) a server unit being operatively connected between the switching unit and the buffer unit, said server unit being adapted to re-transmit buffered data signals.

Thus, according to the second aspect of the present invention a signal unit in the form of an intelligent outlet is provided. The intelligent outlet facilitates that re-transmission of streamed data signal, such as AV signals, only occur between the intelligent outlet and end user client device.

In order to minimize re-transmission of streamed data signals the following approach may be considered: In case of re-transmission of data in TCP connection between an end user client device and a back end server, the signal outlet may be applied to isolate the connections to the signal outlet and from the signal outlet. In this scenario UDP and TCP traffic are preferably used to the signal outlet whereas TCP traffic is only used from the signal outlet.

In order to eliminate re-transmission of streamed data signals the following approach may be considered: In case of a TCP connection between an end user client device and the signal outlet UDP traffic may be used from the signal outlet. Moreover, the signal outlet may determine bitrate from WiFi QoS information.

The intelligent outlet may be a wall mountable outlet suitable for being mounted in a standard wall socket. Alternatively, the intelligent outlet may be a separate unit.

The wireless communication unit, the buffer unit, the switching unit, the streaming unit and the server unit may be implemented as disclosed in relation to the first aspect.

### BRIEF DESCRIPTION OF THE DRAWINGS

The present invention will now be described in further details with reference to the accompanying figures, wherein
Fig. 1 shows a first embodiment of a signal outlet,
Fig. 2 shows a second embodiment of a signal outlet, and
Fig. 3 shows an embodiment of a signal unit.

While the invention is susceptible to various modifications and alternative forms specific embodiments have been shown by way of examples in the drawings and will be described in details herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

In its simplest embodiment the present invention relates to a simple and robust signal outlet, such as a wall mountable signal outlet for standard wall mountable sockets, for providing a local wireless network for distributing data signals in general, including streamed data/AV signals, internet data etc. It is advantageous that the signal outlet of the present invention comprises an integrated power supply unit for powering the elements of the signal outlet. In a more advanced embodiment the present invention relates to an intelligent signal outlet being capable of buffering streamed data signals as well as locally re-transmitting streamed data signals. It is advantageous that local re-transmission of streamed data signals in networks comprising a large number of traditional signal outlets, such as in hotel networks, significantly reduces problems relating to lower network speeds.

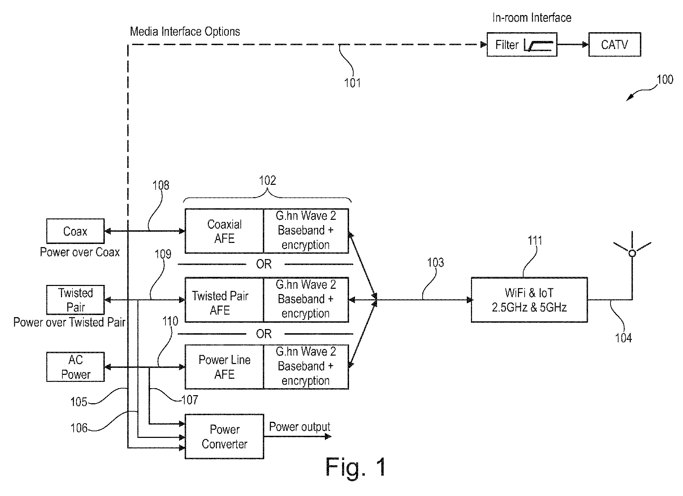

Fig. 1 shows a block diagram 100 of a signal outlet in its simplest embodiment. Starting from the left the signal outlet may have one of the following input signals:
1) A coax input 108,
2) A twisted pair input 109, or
3) AC power input 110

The input signals 108, 109 and power input 110 may originate from a wired installation in a building, such as a wired installation in for example a hotel. The input signals 108, 109 may carry various types of signals including data signals, TV signals, phone signals etc. The power input 110 provides electrical power.

Each of the input signals as well as the power input also carries a data signal which is to be distributed in a wireless manner by the signal outlet. Thus, the data signal to be distributed in a wireless manner is superimposed on another signals/input.

As illustrated in Fig. 1 power is generated from the respective input signals 108, 109 and power input 110 using an integrated power supply unit. Thus, no external/separate power supply unit is required. It should be noted however that an external/separate power supply unit may optionally be provided as a supplementary or main power source.

The integrated power converter generates power from the coax input signal via line 105, or generates power from the twisted pair input signal via line 106, or receive power from the AC power input via line 107. The integrated power converter provides a power output for powering the various components of the entire signal outlet.

As depicted in Fig. 1 the input signals 108, 109 and power input 110 are fed into a stage 102 having an analog front end (AFE) and a baseband receive/transmit unit in the form of a G.hn baseband encryption/decryption unit. The resulting signal 103 is provided to a wireless communication 111 unit which is adapted to distribute the resulting signal 103 in a wireless manner via the antenna structure 104. The wireless communication unit 111 is adapted to act as a local access point and communicate with one or more wireless clients via a selected wireless standard, including LiFi, WIFI, Bluetooth or similar standards. In case of WIFI the communication unit 111 may form a wireless network on 2.5 GHz and/or 5 GHz.

In addition to the wireless network established by the signal outlet a wired cable TV branch 101 comprising a high-pass filter may optionally be provided.

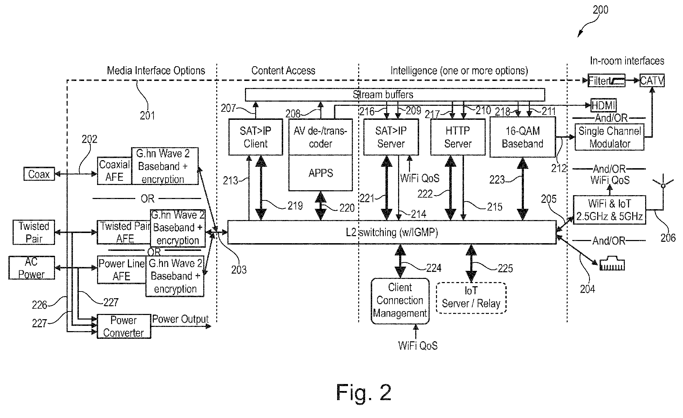

Referring now to Fig. 2 a block diagram of a more complex embodiment 200 of the signal outlet is depicted. Similar to Fig. 1 power is generated from the input signals/power input having the common reference 202. The integrated power converter generates power from the coax input signal via line 226, or generates power from the twisted pair input signal via line 227, or receive power from the AC power input via line 227. The integrated power converter provides a power output for powering the various components of the signal outlet.

As also discussed in relation to Fig. 1 the input signals are fed into a stage having an AFE and a baseband receive/transmit unit in the form of a G.hn baseband encryption/decryption unit.

The resulting signal 203 is provided to a switching unit that may have an internet group management protocol (IGMP). The switching unit is operatively connected to the wireless communication unit which is adapted to distribute the signal 205 from the switching unit in a wireless manner via the antenna structure 206. As addressed above the wireless communication unit is adapted to communicate via a selected wireless standard, including LiFi, WIFI, Bluetooth or similar standards. In case of WIFI the communication unit may form a wireless network on 2.5 GHz and/or 5 GHz.

In addition to the wireless solution a wired solution 204 may optionally be provided as well. Moreover, a complete by-pass of the switching unit may be provided by establishing via a wired cable TV branch 201 comprising a high-pass filter.

Still referring to Fig. 2 the signal outlet further comprises a buffer unit being adapted to buffer streamed data signals, such as streamed AV signals. The signal outlet may further comprising a SAT>IP client being operatively connected between the switching unit and the buffer unit. The SAT>IP client is adapted to obtain 213 streamed data signals from the switching unit as well as provide 207 streamed data signals to the buffer unit. The streamed data signals may comprise streamed AV signals. The SAT>IP client may provide for example live TV or local TV to the buffer unit.

In addition or in combination with the SAT>IP server an AV decoder/transcoder and/or various Apps may provide 208 streamed data signals to the buffer unit. Examples of Apps related functionalities are Netflix and similar services. As depicted in Fig. 2 the AV decoder/transcoder may provide a HDMI output as well.

The signal outlet of the present invention further comprises a SAT>IP server and/or a HTTP server being operatively connected between the buffer unit and the switching unit. The respective SAT>IP server and/or the HTTP server are adapted to obtain 209, 210 and re-transmit 214, 215 buffered data signals, such as buffered AV signals, from the buffer unit.

In order to minimize re-transmission of streamed data signals the following approach may be considered: In case of re-transmission of data in TCP connection between an end user client device and a back end server, the signal outlet may be applied to isolate the connections to the signal outlet and from the signal outlet. In this scenario UDP and TCP traffic are preferably used to the signal outlet whereas TCP traffic is only used from the signal outlet.

In order to eliminate re-transmission of streamed data signals the following approach may be considered: In case of a TCP connection between an end user client device and the signal outlet UDP traffic may be used from the signal outlet. Moreover, the signal outlet may determine bitrate from WiFi QoS information.

In case of an HTTP server this server is intended for delivery of requested AV streams and acquisition information such as required by adaptive streaming clients, such as DASH, HLS, MSS. The SAT>IP server as well as the HTTP server act in response to respective control signals 216, 217.

Moreover, a QAM baseband unit may be provided to obtain 211 and provide 212 buffered data signals to a single channel modulator. The QAM baseband unit acts in response to control signal 218.

A feedback signal (WIFI QoS) is advantageous provided from the wireless communication unit to either the SAT>IP server or a Client Connection Management. In relation to the SAT>IP server the feedback signal facilitates that buffered data signal may be re-transmitted from the buffer unit in order to obtain AV streams with properties best suited for wireless delivery according to the current connection quality, i.e. Quality of Service (QoS). The Client Connection Management is adapted to provide best match stream properties from multiple parameters, such as WiFi connection speed, WiFi re-transmissions, filling status of the buffer unit etc. The signal outlet shown in Fig. 2 also contains an IoT server/relay which may for example be protocol converter or gateway.

The various elements of the signal outlet shown in the central part of Fig. 2 are powered by the power converter via respective power lines 219, 220, 221, 222, 223, 224 and 225.

The various components depicted in Fig. 2 may all be positioned in a wall mountable signal outlet mechanically adapted to geographically specific standard dimensions. Thus, as the signal outlet of the present invention has its own integrated power supply the signal outlet of the present invention may easily replace older signal outlets, such as for example older wired signal outlets.

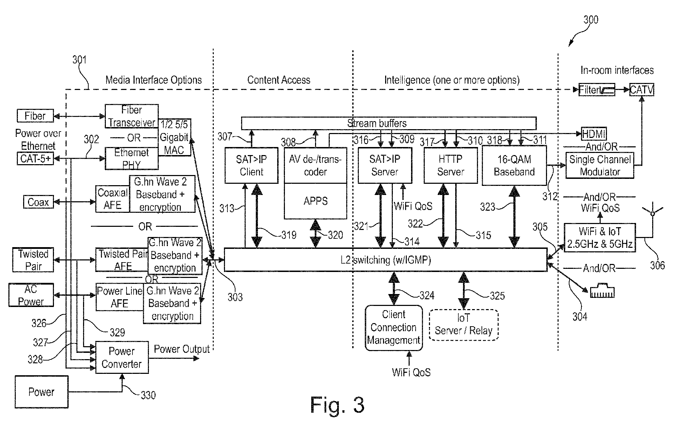

Referring now to Fig. 3 a block diagram of an even more complex embodiment 300 of the signal outlet is depicted. Again, the various components depicted in Fig. 3 may all be positioned in a wall mountable signal outlet having standard dimensions.

Compared to Fig. 2 the embodiment depicted in Fig. 3 is capable of handling input signals from an optical fibre or from an Ethernet input signal (CAT-5+). In addition a separate power supply unit being operatively connected to the power converter via line 330 is provided. The power converter may alternatively generate power from the CAT-5+ input via line 327, or generate power from the coax input signal via line 326, or generate power from the twisted pair input signal via line 328, or receive power from the AC power input via line 329. In Fig. 3 these input signals/power input have the common reference 302.

The optical input is provided to a fibre transceiver before reaching a receive/transmit unit in the form of a MAC unit being capable of operating at speeds up to several gigabits. In a similar manner the CAT-5+ input signal is provided to Ethernet PHY unit before reaching a receive/transmit unit in the form of a Gigabit MAC unit. The MAC signal 303 is provided to a switching unit, cf. below.

Similar to Fig. 2 the input signals from the coax, the twisted pair or the AC power are fed into a stage having an AFE and a baseband receive/transmit unit in the form of a G.hn baseband encryption/decryption unit. The resulting signal 303 is provided to a switching unit that may have an IGMP.

The switching unit is operatively connected to a wireless communication unit which is adapted to distribute the signal 305 from the switching unit in a wireless manner via the antenna structure 306. The wireless communication unit is adapted to setup a local wireless network and communicate via a selected wireless standard, including LiFi, WIFI, Bluetooth or similar standards. In case of WIFI the communication unit may form a wireless network on 2.5 GHz and/or 5 GHz.

In addition to the wireless solution a wired solution 304 may optionally be provided as well. Moreover, a complete by-pass of the switching unit may be provided by establishing via a wired cable TV branch 301 comprising a high-pass filter.

Still referring to Fig. 3 the signal outlet further comprises a buffer unit being adapted to buffer streamed data signals, such as streamed AV signals. The signal outlet may further comprise a SAT>IP client being operatively connected between the switching unit and the buffer unit, said SAT>IP client adapted to obtain streamed data signals, such as streamed AV signals, from the switching unit as well as provide streamed data signals, such as streamed AV signals, to the buffer unit via the respective lines 313, 307. The SAT>IP client may provide for example live TV or local TV to the buffer unit.

In addition or in combination with the SAT>IP server an AV decoder/transcoder and/or various Apps may provide 308 streamed data signals to the buffer unit. Examples of Apps related functionalities are Netflix and similar services. As depicted in Fig. 3 the AV decoder/transcoder may provide a HDMI output.

The signal outlet of the present invention further comprises a SAT>IP server and/or a HTTP server being operatively connected between the buffer unit and the switching unit. The respective SAT>IP server and/or the HTTP server are adapted to obtain 309, 310 and re-transmit 314, 315 buffered data signals, such as buffered AV signals. In case of an HTTP server this server is intended for delivery of requested AV streams and acquisition information such as required by adaptive streaming clients, such as DASH, HLS, MSS. The SAT>IP server as well as the HTTP server act in response to respective control signals 316, 317.

Moreover, a QAM baseband unit may be provided to obtain 311 and provide 312 buffered data signals to a single channel modulator. The QAM baseband unit acts in response to control signal 318.

A feedback signal (WIFI QoS) is advantageous provided from the wireless communication unit to the SAT>IP server or to a Client Connection Management. In relation to the SAT>IP server the feedback signal facilitates that buffered data signal may be re-transmitted from the buffer unit in order to obtain AV streams with properties best suited for wireless delivery according to the current connection quality, i.e. Quality of Service (QoS). The Client Connection Management is adapted to provide best match stream properties from multiple parameters, such as WiFi connection speed, WiFi re-transmissions, filling status of the buffer unit etc. The signal outlet shown in Fig. 2 also contains an IoT server/relay which may for example be protocol converter or gateway.

The various elements of the signal outlet shown in the central part of Fig. 3 are powered by the power converter via respective power lines 319, 320, 321, 322, 323, 324 and 325.

It should be noted that the embodiments depicted in Figs. 1-3 may be integrated in a wall mountable signal outlet having standard, country specific dimensions. The signal outlet is supplied by one of the above-mentioned input signals, i.e. coax input signal, the twisted pair input signal, an AC power input signal, an optical input signal or a CAT-5+ input signal. With the exception of the optical input signal the integrated power supply unit generate power from one of the input signals.

It should also be noted that the embodiment depicted in Fig. 3 has its own power supply unit. Thus, in terms of power the embodiments of Fig. 3 may not necessarily have to generate power from one of the input signals. Also, the embodiment of Fig. 3 may be implemented as a stand-alone box.

## Claims

1. A signal outlet for providing a wireless network, the signal outlet comprising
a) an input/output terminal adapted to receive an input signal comprising first signal being superimposed into a second signal,
b) a wireless communication unit adapted to provide a local wireless network in a vicinity of the signal outlet, and
c) a power supply unit being adapted to generate power from an input signal being provided on the input/output terminal.

2. A signal outlet according to claim 1, wherein the first signal comprises a data signal.

3. A signal outlet according to claim 1 or 2, wherein the first signal comprises a baseband signal and/or a baseband signals modulated onto a radio frequency signal.

4. A signal outlet according to any of claims 1-3, wherein the wireless communication unit is adapted to operate in accordance with wireless standards, such as LiFi, WIFI or Bluetooth.

5. A signal outlet according to any of the preceding claims, wherein the power supply unit comprises at least one power converter.

6. A signal outlet according to any of the preceding claims, further comprising a baseband receive/transmit unit.

7. A signal outlet according to claim 6, wherein the baseband receive/transmit unit is adapted to be operated in accordance with the G.hn specification.

8. A signal outlet according to any of the preceding claims, further comprising a switching unit.

9. A signal outlet according to claim 8, further comprising a buffer unit adapted to buffer streamed data signals.

10. A signal outlet according to claim 9, further comprising a streaming unit being operatively connected between the switching unit and the buffer unit, said streaming unit being adapted to obtain and provide streamed data signals to the buffer unit.

11. A signal outlet according to claim 10, wherein the streaming unit comprises a SAT>IP client.

12. A signal outlet according to any of claims 9-11, further comprising a server unit being operatively connected between the buffer unit and the switching unit, said server unit being adapted to re-transmit buffered data signals.

13. A signal outlet according to claim 12, further comprising feedback arrangement from the wireless communication unit, the buffer unit and the streaming unit to the server unit being adapted to re-transmit buffered data signals.

14. A signal outlet according to claim 12, further comprising an HTTP server adapted to deliver requested AV streams and acquisition information required by adaptive streaming clients, such as DASH, HLS, MSS.

15. A signal unit for providing a wireless network, the signal unit comprising
a) an input/output terminal,
b) a wireless communication unit adapted to provide a local wireless network in a vicinity of the signal outlet,
c) a buffer unit adapted to buffer streamed data signals received via the input/output terminal,
d) a switching unit,
e) a streaming unit being operatively connected between the switching unit and the buffer unit, said streaming unit being adapted to obtain and provide streamed data signals to the buffer unit, and
f) a server unit being operatively connected between the switching unit and the buffer unit, said server unit being adapted to re-transmit buffered data signals.
